# EUROPÄISCHE PATENTANMELDUNG

(11) **EP 3 614 109 A1**
(43) Veröffentlichungstag der Anmeldung: **26.02.2020**
(21) Anmeldenummer: 18190129.9
(22) Anmeldetag: 22.08.2018
(51) Int. Cl.: G01F 1/698, G01F 15/02, G01F 1/74, G01N 21/552, G01N 21/43

(54) **MESSVORRICHTUNG UND MESSSONDE FÜR EIN STRÖMENDES FLUID**

(71) Anmelder: Technische Universität Graz, 8010 Graz (AT)
(72) Erfinder: THEISSL, Mario, 8541 Schwanberg (AT)
(74) Vertreter: Weiser & Voith Patentanwälte Partnerschaft

(57) **Zusammenfassung**

Die vorliegende Erfindung betrifft eine Messvorrichtung (1) zum Messen der Strömungsgeschwindigkeit (v) eines strömenden Fluids (2), umfassend ein erstes Messelement (3) mit einer dem strömenden Fluid (2) aussetzbaren Grenzfläche (6), welches zum Messen der Strömungsgeschwindigkeit (v) des Fluids (2) ausgebildet ist, ein zweites Messelement (4) mit einer dem strömenden Fluid (2) aussetzbaren Grenzfläche (7), welches zum Messen einer charakteristischen Eigenschaft des Fluids (2) ausgebildet ist, und eine an das erste und zweite Messelement (3, 4) angeschlossene Auswerteeinrichtung (5), welche zum Korrigieren der vom ersten Messelement (3) gemessenen Strömungsgeschwindigkeit (v) um den Einfluss der vom zweiten Messelement (4) gemessenen Eigenschaft des Fluids (2) auf das Messen der Strömungsgeschwindigkeit (v) ausgebildet ist. Die Erfindung betrifft ferner eine Messsonde (17) für eine solche Messvorrichtung (1).

## Beschreibung

Die vorliegende Erfindung betrifft eine Messvorrichtung mit einem Messelement zum Messen der Strömungsgeschwindigkeit eines strömenden Fluids. Die Erfindung betrifft ferner eine Messsonde für eine solche Messvorrichtung.

Das strömende Fluid ist ein flüssiges oder gasförmiges Medium, z.B. Luft, Wasser oder Öl, oder ein Gemisch aus flüssigen und gasförmigen Medien. Messvorrichtungen der vorgenannten Art werden beispielsweise zur Durchflussmessung, z.B. in einem Strömungskanal eines ölgefüllten Getriebes, oder zum Messen der Windgeschwindigkeit in der Anemometrie verwendet. Zur Durchflussmessung sind insbesondere elektronmagnetische, Differenzdruck- und Ultraschall-Verfahren sowie kalorimetrische Verfahren bekannt.

Bei dem letztgenannten Verfahren wird ein dem strömenden Fluid ausgesetzter Messfühler, welcher z.B. einen temperaturabhängigen elektrischen Widerstand hat, geheizt. Das an der wärmeleitfähigen Grenzfläche des Messfühlers vorbeiströmende Fluid entzieht der Grenzfläche und damit dem Messfühler Wärme. Die entzogene Wärme, welche aus der zugeführten Wärme und der Temperatur des Messfühlers ermittelbar ist, hängt von der Strömungsgeschwindigkeit des Fluids ab, sodass auf die Strömungsgeschwindigkeit rückgeschlossen werden kann. Neben der Strömungsgeschwindigkeit hängt die entzogene Wärme jedoch auch von der Temperaturdifferenz zwischen der Grenzfläche und dem Fluid und von dessen Massendichte ab. Ist die Temperatur des Fluids nicht bekannt, so kann diese mit geringem Mehraufwand, z.B. mithilfe eines weiteren Temperatursensors, ermittelt werden. Vergleichbare Zusammenhänge gelten für die genannten anderen Messverfahren, das elektromagnetische, das Differenzdruck- bzw. das Ultraschall-Verfahren.

In vielen Anwendungen, z.B. beim Messen der Windgeschwindigkeit oder des Durchflusses in einem Strömungskanal, ist das auf seine Strömungsgeschwindigkeit zu messende Fluid (z.B. Luft, Wasser oder Öl) vorbekannt. Dadurch kann dessen Massendichte, wenn nicht ohnehin bekannt, mit ausreichender Genauigkeit geschätzt und so ein eindeutiges Messergebnis erzielt werden. Ist hingegen die Massendichte des Fluids nicht bekannt, ergibt die jeweilige Messung der Strömungsgeschwindigkeit kein eindeutiges Ergebnis, da der Messwert für ein Fluid mit hoher Massendichte und geringer Strömungsgeschwindigkeit mit dem Messwert für ein Fluid mit geringer Massendichte und hoher Strömungsgeschwindigkeit zusammenfallen kann. Ein solcher Fall tritt z.B. beim Messen der Strömungsgeschwindigkeit der Fluide in einem Strömungskanal eines teilweise ölgefüllten Getriebes ein, da nicht bekannt ist, zu welchem Zeitpunkt welches Fluid an dem Messelement vorbeiströmt. Bisher ist üblich, im Messergebnis auftretende Zwei- oder Mehrdeutigkeiten manuell nachzukorrigieren, was jedoch aufwändig und wenig treffsicher ist.

Die Erfindung setzt sich zum Ziel, eine Messvorrichtung zum Messen der Strömungsgeschwindigkeit und eine Messsonde hiefür zu schaffen, welche auch für verschiedenartige Fluide stets eindeutige Messergebnisse liefern.

Das Ziel wird gemäß einem ersten Aspekt der Erfindung mit einer Messvorrichtung zum Messen der Strömungsgeschwindigkeit eines strömenden Fluids erreicht, welche sich auszeichnet durch:
ein erstes Messelement mit einer dem strömenden Fluid aussetzbaren Grenzfläche, welches zum Messen der Strömungsgeschwindigkeit des Fluids ausgebildet ist;
ein zweites Messelement mit einer dem strömenden Fluid aussetzbaren Grenzfläche, welches zum Messen einer charakteristischen Eigenschaft des Fluids ausgebildet ist; und
eine an das erste und zweite Messelement angeschlossene Auswerteeinrichtung, welche zum Korrigieren der vom ersten Messelement gemessenen Strömungsgeschwindigkeit um den Einfluss der vom zweiten Messelement gemessenen Eigenschaft des Fluids auf das Messen der Strömungsgeschwindigkeit ausgebildet ist.

Der Erfindung liegt die Erkenntnis zugrunde, dass sich durch das Messen einer charakteristischen Eigenschaft des Fluids, d.h. einer physikalischen Eigenschaft des Fluids selbst, z.B. seiner optischen Dichte, Fluoreszenz, Dielektrizitätskonstante bzw. seines ohmschen Widerstands, das Fluid mit hoher Treffsicherheit bestimmen lässt. So kann durch die Kombination aus zweier Messungen die Strömungsgeschwindigkeit mehrerer verschiedener Fluide eindeutig gemessen werden: Anhand ihrer jeweiligen gemessenen charakteristischen Eigenschaft werden die strömenden Fluide unterschieden, sodass die Messvorrichtung nach Kalibrierung in jedem Zeitpunkt einen eindeutigen, fluidspezifischen Messwert für die Strömungsgeschwindigkeit liefert. Eine aufwändige manuelle Nachkorrektur entfällt. Dabei kann die Messvorrichtung nicht nur zwischen Fluiden verschiedener Phasen (flüssig oder gasförmig) unterscheiden, sondern anhand der Verschiedenheit der jeweils gemessenen charakteristischen Eigenschaft des Fluids auch zwischen z.B. unterschiedlichen Ölen, Öl und Wasser oder unterschiedlichen Gasen, und sogar Mischungsverhältnisse der Fluide ermitteln.

Zum Messen der Strömungsgeschwindigkeit des Fluids kann beispielsweise ein elektromagnetisches, ein Differenzdruck- und/oder ein Ultraschall-Verfahren eingesetzt werden. Bevorzugt ist die genannte Grenzfläche des ersten Messelements wärmeleitend und das genannte erste Messelement zum kalorimetrischen Messen der Strömungsgeschwindigkeit des Fluids anhand des Wärmeübergangs zwischen seiner wärmeleitenden Grenzfläche und dem strömenden Fluid ausgebildet. Ein solches Messelement zum kalorimetrischen Messen ist einfach im Aufbau und robust und zuverlässig im Betrieb.

Je nach Anwendungsfall und in Betracht kommenden Fluiden kann das zweite Messelement z.B. die Fluoreszenz, die Dielektrizitätskonstante bzw. den ohmschen Widerstand des Fluids messen. Besonders vorteilhaft ist hingegen, wenn die genannte Grenzfläche des zweiten Messelements transparent und das genannte zweite Messelement zum Messen der optischen Dichte des Fluids anhand der optischen Reflektivität oder Refraktivität seiner transparenten Grenzfläche zu dem strömenden Fluid ausgebildet ist. Bereits geringfügige Unterschiede in der optischen Dichte zweier Fluide reichen aus, um deren eindeutige Unterscheidung - z.B. infolge des Auftretens oder Nicht-Auftretens von Totalreflexion an der transparenten Grenzfläche - sicherzustellen. So kann auch z.B. der Gasgehalt des Getriebeöls od.dgl. anhand der vom zweiten Messelements ermittelten optischen Dichte bestimmt und das Messen der Strömungsgeschwindigkeit entsprechend korrigiert werden. Der Fall, dass verschiedene Fluide aufgrund identischer Brechungsindizes nicht unterscheidbar wären, ist in praktischen Anwendungen unwahrscheinlich.

Das kalorimetrische erste Messelement könnte nach dem sogenannten Aufheizverfahren das Fluid mit einem zwischen einem ersten und einem zweiten Temperaturfühler angeordneten zusätzlichen Heizelement heizen, wobei die Temperaturdifferenz des strömenden Fluids jeweils vor und hinter dem Heizelement erfasst wird. In einer bevorzugten Ausführungsform umfasst hingegen das erste Messelement einen ersten Temperaturfühler zur Messung der Temperatur des Fluids und einen von einer Regelschaltung auf eine gegenüber der Temperatur des Fluids konstante Temperaturdifferenz geheizten zweiten Temperaturfühler, der die genannte wärmeleitende Grenzfläche aufweist, wobei die von der Regelschaltung dem zweiten Temperaturfühler zugeführte Heizleistung ein Maß für die Strömungsgeschwindigkeit ist. Dabei ist die Erwärmung des Fluids geringer als beim Aufheizverfahren, was nicht nur energiesparend ist, sondern auch mögliche Nebenwirkungen im strömenden Fluid vermeiden hilft. Ferner kann das Messelement platzsparender aufgebaut sein.

Besonders bevorzugt umfasst das optische zweite Messelement eine Lichtquelle zum Aussenden eines Lichtstrahls, für den Lichtstrahl einen Lichtleiter mit der genannten transparenten Grenzfläche, auf welche der ausgesandte Lichtstrahl in spitzem Winkel auftrifft, einen eine an der transparenten Grenzfläche auftretende Reflexion oder Refraktion des Lichtstrahls erfassenden Lichtfühler und eine Detektorschaltung für den Lichtfühler zum Detektieren der optischen Reflektivität oder Refraktivität der transparenten Grenzfläche. Dieser Aufbau des zweiten Messelements ist einfach und robust. Je nach Anforderung kann einerseits ein Refraktionswinkel des Lichtstrahls an der transparenten Grenzfläche anhand des Auftreffpunktes des gebrochenen Lichtstrahls auf dem Lichtfühler gemessen und damit die genaue optische Dichte des Fluids bestimmt werden, wozu ferner ein allfälliger Anteil an Reflexion des Lichtstrahls ausgewertet werden könnte; alternativ oder ergänzend kann der Winkel gemessen werden, bei welchem an der transparenten Grenzfläche Totalreflexion des auftreffenden Lichtstrahls auftritt, z.B. indem die Lichtquelle den Lichtstrahl auffächert bzw. in zeitlicher Abfolge in verschiedenen Winkeln auf die transparente Grenzfläche aussendet und dabei das örtliche bzw. das zeitliche Auftreffen des reflektierten Lichtstrahls auf dem Lichtfühler mitberücksichtigt wird. In den meisten Fällen reicht andererseits aus, zu erkennen, ob Totalreflexion an der transparenten Grenzfläche aufgetreten ist, d.h. das Fluid eine vom Lichtleiter ausreichend verschiedene optische Dichte hat, oder nicht, sodass auf einfache Weise zwischen zwei verschiedenen Fluiden, einem optisch dichten und einem optisch weniger dichten, unterschieden wird.

Vorteilhaft ist, wenn die Auswerteeinrichtung in einem Gehäuse angeordnet ist, und dabei der erste und der zweite Temperaturfühler, die Lichtquelle, der Lichtleiter und der Lichtfühler in einer vom Gehäuse separaten Messsonde angeordnet sind. Auf diese Weise lässt sich eine flexible einsetzbare, insbesondere schlanke Messsonde aufbauen, ohne dass die gesamte Messvorrichtung zu integrieren und dem strömenden Fluid auszusetzen ist. Messdaten können dabei über ein Kabel oder eine Drahtlosverbindung von der Messsonde an die Auswerteeinrichtung gesandt werden.

Besonders günstig ist dabei, wenn in dem Gehäuse ferner die Regelschaltung und die Detektorschaltung angeordnet sind. So sind auch diese Teile der Messvorrichtung nicht der Temperatur des Fluids ausgesetzt und die Messsonde ist noch kleiner und robuster.

In einem zweiten Aspekt schafft die Erfindung eine Messsonde, welche insbesondere für eine Messvorrichtung der vorgenannten Art verwendet werden kann, umfassend:
einen Träger;
für das Messen der Strömungsgeschwindigkeit des Fluids, einen an dem Träger verankerten ersten Messgeber mit einer Grenzfläche;
für das Messen einer charakteristischen Eigenschaft des Fluids, einen an dem Träger verankerten zweiten Messgeber mit einer Grenzfläche; und
einen elektrischen Anschluss, mit welchem die beiden Messgeber verbunden sind,
wobei die genannten Grenzflächen des ersten und des zweiten Messgebers an einer Außenseite der Messsonde zum Eintauchen in ein strömendes Fluid dargeboten sind.

Hinsichtlich weiterer Ausführungsvarianten der Messsonde und der Vorteile der Kombination des Messens der Strömungsgeschwindigkeit mit dem Messen einer charakteristischen Eigenschaft des strömenden Fluids zur Korrektur des Messens der Strömungsgeschwindigkeit um den Einfluss der gemessenen charakteristischen Eigenschaft wird auf die vorangegangenen Ausführungen zu der Messvorrichtung verwiesen. Insbesondere ist es vorteilhaft, wenn der genannte erste Messgeber einen ersten Temperaturfühler und einen zweiten Temperaturfühler mit der genannten Grenzfläche umfasst, wobei die genannte Grenzfläche des ersten Messgebers wärmeleitend ist, und/oder wenn der genannte zweite Messgeber eine Lichtquelle zum Aussenden eines Lichtstrahls, für den Lichtstrahl einen Lichtleiter mit der genannten Grenzfläche, auf welche der ausgesandte Lichtstrahl in spitzem Winkel auftrifft, und einen eine an der Grenzfläche auftretende Reflexion oder Refraktion des Lichtstrahls erfassenden Lichtfühler umfasst, wobei die genannte Grenzfläche des zweiten Messgebers transparent ist.

Besonders günstig ist dabei, wenn die Lichtquelle an einer ersten Seite des Trägers und der Lichtfühler an einer der ersten abgewandten zweiten Seite des Trägers verankert sind, und wenn sich der Lichtleiter von der ersten zur zweiten Seite erstreckt. Ohne weitere Bauteile werden auf diese Weise Lichtquelle und Lichtfühler voneinander optisch getrennt, sodass eine Störung durch über unerwünschte Lichtpfade geführtes Streulicht vermieden wird.

Besonders bevorzugt hat dabei der Lichtleiter die Form eines Prismas, dessen eine Mantelfläche der Lichtquelle und dem Lichtfühler zugewandt ist und von dessen anderen Mantelflächen zumindest eine die genannte transparente Grenzfläche bildet. Die zweite der genannten anderen Mantelflächen kann dabei entweder verspiegelt sein oder ebenfalls transparent und somit beide anderen Mantelflächen gemeinsam die transparente Grenzfläche bilden. So kann eine deutlich erfassbare zweimalige Reflexion des Lichtstrahls an den genannten anderen Mantelflächen erzielt werden, was die Detektion des Fluids anhand der optischen Reflektivität bzw. Refraktivität der transparenten Grenzfläche erleichtert. Ferner lässt sich ein prismenförmiger Lichtleiter einfach und strömungsgünstig in die Messsonde, z.B. an ihrer Spitze, integrieren.

Die Erfindung wird nachfolgend anhand eines in den beigeschlossenen Zeichnungen dargestellten Ausführungsbeispiels näher erläutert. In den Zeichnungen zeigen:
Fig. 1 eine erfindungsgemäße Messvorrichtung in einer schematischen Seitenansicht;
Fig. 2 die Messsonde der Messvorrichtung von Fig. 1 in einer schematischen Draufsicht;
Fig. 3 die Messvorrichtung von Fig. 1 in einem Blockschaltbild; und
die Fig. 4a bis 4c jeweils einen vergrößerten Ausschnitt A der Messsonde der Messvorrichtung von Fig. 1, eingetaucht in ein Fluid mit geringer optischer Dichte (Fig. 4a), in ein Fluid mit hoher optischer Dichte (Fig. 4b) und in ein Fluid mit geringer optischer Dichte mit einem an der Messsonde haftenden Tröpfchen eines Fluids mit hoher optischer Dichte (Fig. 4c).

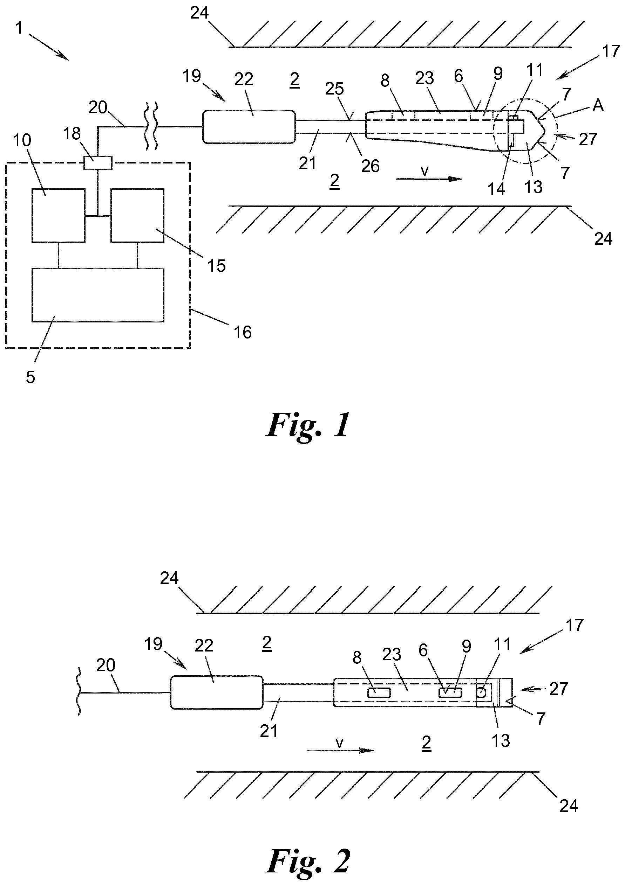

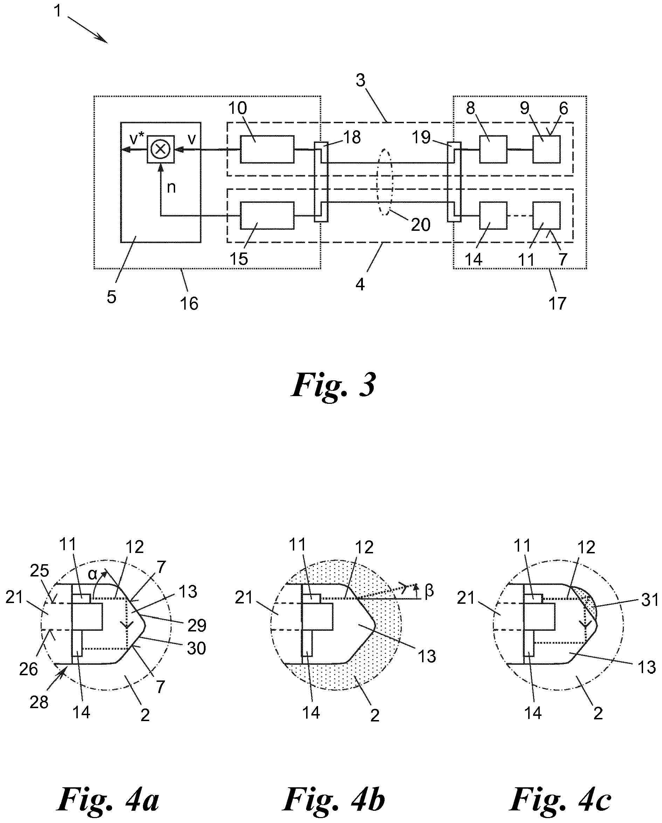

Die Fig. 1 bis 4 zeigen eine Messvorrichtung 1 zum Messen der Strömungsgeschwindigkeit v eines strömenden Fluids 2. Die Messvorrichtung 1 hat ein erstes Messelement 3 und ein zweites Messelement 4 (strichlierte Linien in Fig. 3) und eine Auswerteeinrichtung 5. Die Auswerteeinrichtung 5 ist an das erste und das zweite Messelement 3, 4 angeschlossen.

Das erste Messelement 3 misst die Strömungsgeschwindigkeit v des Fluids 2 in dem dargestellten Beispiel kalorimetrisch. Zu diesem Zweck erfasst das erste Messelement 3 den Wärmeübergang zwischen einer dem strömenden Fluid 2 ausgesetzten wärmeleitenden Grenzfläche 6 des ersten Messelements 3 und dem strömenden Fluid 2. Der Wärmeübergang ist umso größer, je höhere Strömungsgeschwindigkeit v und Massendichte das strömende Fluid 2 hat. So führt ein Fluid 2 hoher Strömungsgeschwindigkeit v und geringer Massendichte zu dem gleichen Wärmeübergang wie ein Fluid 2 geringer Strömungsgeschwindigkeit v und hoher Massendichte.

Alternativ kann das erste Messelement 3 die Strömungsgeschwindigkeit v des Fluids 2 auf elektromagnetische Weise, mittels Differenzdruck- oder Ultraschallmessung ermitteln, wozu die genannte Grenzfläche z.B. eine Elektrode oder Membran od.dgl. wäre, wie dem Fachmann bekannt ist. Auch diese alternativen Messverfahren führen jeweils zu einer Zwei- bzw. Mehrdeutigkeit beim Messen der Strömungsgeschwindigkeit v.

Das zweite Messelement 4 misst in dem dargestellten Beispiel die optische Dichte n des strömenden Fluids 2, um verschiedene Fluide 2 voneinander zu unterscheiden. Zu diesem Zweck erfasst das zweite Messelement 4 die optische Reflektivität oder Refraktivität einer dem strömenden Fluid 2 ausgesetzten transparenten Grenzfläche 7 zwischen dem zweiten Messelement 4 und dem strömenden Fluid 2. Anstelle der optischen Dichte n könnte das zweite Messelement 4 eine andere charakteristische Eigenschaft des Fluids 2 messen, d.h. eine andere physikalische Eigenschaft des Fluids 2 selbst, nicht eine von außen eingeprägte Eigenschaft wie die Temperatur, den Druck oder die Strömungsgeschwindigkeit v. Beispielsweise könnte das zweite Messelement 4 z.B. eine optische Messung der Fluoreszenz, eine kapazitive Messung der Dielektrizitätskonstante oder eine Messung des ohmschen Widerstandes des Fluids 2 vornehmen; dazu wäre die genannte Grenzfläche des zweiten Messelements 4 z.B. wiederum transparent oder hätte eine oder mehrere voneinander elektrisch isolierte Elektroden.

Die Auswerteeinrichtung 5 korrigiert die vom ersten Messelement 3 gemessene Strömungsgeschwindigkeit v um den Einfluss der vom zweiten Messelement 4 gemessenen Eigenschaft (hier: der optischen Dichte n) auf das Messen der Strömungsgeschwindigkeit v (hier: auf den Wärmeübergang an der wärmeleitenden Grenzfläche 6), um einen korrigierten Wert v* der Strömungsgeschwindigkeit v zu erhalten. Dazu nutzt die Auswerteeinrichtung 5 aus, dass Fluide 2 unterschiedlicher Massendichte, z.B. ein Gas und eine Flüssigkeit oder Wasser und ein Öl etc., im Allgemeinen unterschiedliche optische Dichten n, Fluoreszenzen, Dielektrizitätskonstanten und/oder ohmsche Widerstände haben. Diese Eigenschaften des Fluids 2 stehen somit jeweils in Zusammenhang mit z.B. dem Wärmeübergang an der wärmeleitenden Grenzfläche 6. Ist das Fluid 2 anhand seiner charakteristischen Eigenschaft erkannt, kann dessen Strömungsgeschwindigkeit v eindeutig gemessen werden, d.h. eine zwei- oder mehrdeutig gemessene Strömungsgeschwindigkeit v wird anhand der gemessenen Eigenschaft (z.B. der optischen Dichte n) korrigiert.

In dem Ausführungsbeispiel der Fig. 1 bis 3 umfasst das kalorimetrische erste Messelement 3 einen ersten Temperaturfühler 8, z.B. einen temperaturabhängigen elektrischen Widerstand, insbesondere ein Kaltleiter (PTC-Thermistor) oder Heißleiter (NTC-Thermistor), eine Zenerdiode oder ein Thermoelement. Mit dem ersten Temperaturfühler 8 misst das erste Messelement 3 die Temperatur des Fluids 2 in dem Fachmann bekannter Weise. Ferner umfasst das erste Messelement 3 einen zweiten Temperaturfühler 9, welcher die genannte wärmeleitende Grenzfläche 6 zu dem strömenden Fluid 2 aufweist. Optional hat auch der erste Temperaturfühler 8 eine ähnliche Grenzfläche.

Der zweite Temperaturfühler 9 wird in diesem Beispiel von einer Regelschaltung 10 derart geheizt, dass er die vom ersten Temperaturfühler 8 gemessenen Temperatur des Fluids 2 um eine konstante Temperaturdifferenz überschreitet. Die von der Regelschaltung dem zweiten Temperaturfühler 9 dazu zugeführte Heizleistung ist aufgrund des strömungsgeschwindigkeitsabhängigen Wärmeübergangs an der wärmeleitenden Grenzfläche 6 ein Maß für die Strömungsgeschwindigkeit v des Fluids 2. Zur Schätzung und Kompensation des dynamischen Verhaltens bzw. der thermischen Trägheit der beiden Temperaturfühler 8, 9 bei transienten Änderungen der Temperatur bzw. der Strömungsgeschwindigkeit des Fluids 2 kann die Auswerteeinrichtung 5 ferner einen optionalen Schätzer umfassen, z.B. einen nicht-linearen Kalman-Filter, einen Punktschätzer oder einen anderen in der stochastischen Signalverarbeitung bekannten Schätzer.

Der zweite Temperaturfühler 9 ist z.B. ein temperaturabhängiger elektrischer Widerstand und wird unmittelbar von der Regelschaltung 10 elektrisch geheizt; alternativ könnte ein separater Heizwiderstand dafür vorgesehen sein.

Anstatt auf eine konstante Temperaturdifferenz gegenüber dem Fluid 2 könnte die Regelschaltung 10 den zweiten Temperaturfühler 9 mit Konstantstrom heizen und die Temperatur des zweiten Temperaturfühler 9 messen, um daraus den Wärmeübergang an der wärmeleitenden Grenzfläche 6 zu ermitteln. Ferner könnte der erste Temperaturfühler 8 entfallen, z.B. wenn die Temperatur des Fluids 2 ausreichend genau bekannt ist. In einer weiteren Alternative könnte ein separates Heizelement (nicht dargestellt) dem zweiten Temperaturfühler 9 in Richtung der Strömungsgeschwindigkeit v vorgelagert sein, sodass der erste und der zweite Temperaturfühler 9 die Temperaturdifferenz des Fluids 2 vor und hinter dem Heizelement messen.

In dem dargestellten Beispiel umfasst das optische zweite Messelement 4 eine Lichtquelle (z.B. eine Leucht- oder Laserdiode) 11, welche einen Lichtstrahl 12 (Fig. 4a) aussendet. Das zweite Messelement 4 umfasst ferner einen Lichtleiter 13 für den Lichtstrahl 12. Der Lichtleiter 13 weist die genannte transparente Grenzfläche 7 auf. Die Lichtquelle 11 und die transparente Grenzfläche 7 sind derart angeordnet bzw. ausgerichtet, dass der von der Lichtquelle 11 ausgesandte Lichtstrahl 12 in spitzem Winkel α auf die Grenzfläche 7 auftrifft.

Außerdem umfasst das zweite Messelement 4 einen Lichtfühler (z.B. eine Photodiode) 14 und eine Detektorschaltung 15. Der Lichtfühler 14 ist derart angeordnet und ausgerichtet, dass er eine Reflexion oder eine Refraktion des Lichtstrahls 12 an der transparenten Grenzfläche 7 erfasst. Die Detektorschaltung 15 erkennt eine Reflexion oder Refraktion beispielsweise anhand eines schwellwertüber- oder -unterschreitenden Signals des Lichtfühlers 14 und kann daraus auf ein Fluid 2 geringerer oder höherer optischer Dichte n schließen. Optional kann die Detektorschaltung 15 anhand des Auftreffpunktes des Lichtstrahls 12 auf dem Lichtfühler 14 einen Winkel α, bei welchem Totalreflexion auftritt, (Fig. 4a) oder einen Refraktionswinkel β (Fig. 4b) ermitteln und daraus die optische Dichte n des Fluids 2 bestimmen, wie unter Bezugnahme auf die Darstellungen in den Fig. 4a bis 4c weiter unten ausführlich erläutert wird.

Zur optionalen Kompensation von Umgebungslicht kann die Lichtquelle 11 gepulst betrieben werden, sodass die Detektorschaltung 15 oder die Auswerteeinrichtung 5 den vom Lichtfühler 14 erfassten Lichtstrahl 12 um das vom Lichtfühler 14 in Pulspausen erfasste Umgebungslicht korrigieren kann. Alternativ oder ergänzend kann optional ein Filter eingesetzt werden, um von der Wellenlänge des Lichtstrahls 12 abweichendes Umgebungslicht zu unterdrücken.

Die Auswerteeinrichtung 5 der Messvorrichtung 1 ist in dem Beispiel der Fig. 1 und 3 in einem Gehäuse 16 angeordnet. Dabei sind der erste und der zweite Temperaturfühler 8, 9 des ersten Messelements 3 und die Lichtquelle 11, der Lichtleiter 13 und der Lichtfühler 14 des zweiten Messelements 4 in einer vom Gehäuse 16 separaten Messsonde 17 angeordnet. In dem Gehäuse 16 sind ferner die Regelschaltung 10 und die Detektorschaltung 15 angeordnet. Das Gehäuse 16 und die Messsonde 17 haben jeweils einen elektrischen Anschluss 18, 19, wobei die Regelschaltung 10 und die Detektorschaltung 15 jeweils mit dem Anschluss 18 des Gehäuses 16 und der erste und zweite Temperaturfühler 8, 9 und der Lichtfühler 14 - sowie optional die Lichtquelle 11 - mit dem Anschluss 19 der Messsonde 17 verbunden sind. Die Anschlüsse 18, 19 sind miteinander über ein Versorgungs- und Datenkabel 20 elektrisch verbunden, sodass die Regelschaltung 10 mit den Temperaturfühlern 8, 9 und die Detektorschaltung 15 mit dem Lichtfühler 14 - und optional mit der Lichtquelle 11 - verbunden ist.

Alternativ können die Regelschaltung 10 und die Detektorschaltung 15 in der Messsonde 17 angeordnet sein; ferner könnte sogar, wenn gewünscht, die Auswerteeinrichtung 5 in der Messsonde 17 - z.B. in Form eines Micro Electro-Mechanical Systems (MEMS) - angeordnet sein und das Gehäuse 16 entfallen. Optional kann das Kabel 20 durch eine Daten-Funkverbindung ersetzt und/oder die Messsonde 17 durch eine Batterie, über induktive Kopplung oder mittels Energy Harvesting energieversorgt sein.

In dem dargestellten Beispiel umfasst die Messsonde 17 einen Träger 21, z.B. eine (optional flexible) Leiterplatte. An dem Träger 21 ist für das Messen der Strömungsgeschwindigkeit v des Fluids 2 ein erster Messgeber mit einer Grenzfläche 6 verankert; ferner ist an dem Träger 21 für das Messen einer charakteristischen Eigenschaft des Fluids 2 ein zweiter Messgeber mit einer Grenzfläche 7 verankert. In diesem Beispiel umfasst der erste Messgeber den ersten Temperaturfühler 8 und den zweiten Temperaturfühler 9 und die genannten Grenzfläche ist die wärmeleitende Grenzfläche 6; der zweite Messgeber umfasst die Lichtquelle 11, den Lichtleiter 13, welcher als Grenzfläche des zweiten Messgebers die transparente Grenzfläche 7 hat, und den Lichtfühler 14. Auch der Anschluss 19 ist optional am Träger 21 verankert und kann von einer Verstärkungshülse 22 eingefasst sein. Um den zweiten Temperaturfühler 9 herum, insbesondere zwischen dem ersten und dem zweiten Temperaturfühler 8, 9, ist eine optionale thermische Isolation 23, z.B. aus Silikon, am Träger 21 angebracht. Die thermische Isolation 23 oder ein anderer Mantel kann den Träger 21 zumindest bereichsweise ummanteln und ihm dabei eine strömungsgünstige Form verleihen.

Es versteht sich, dass die (hier: wärmeleitende) Grenzfläche 6 des ersten Messgebers und die (hier: transparente) Grenzfläche 7 des zweiten Messgebers an der Außenseite der Messsonde 17, d.h. ohne Ummantelung, dem strömenden Fluid 2 dargeboten sind, sodass die beiden Grenzflächen 6, 7 dem Fluid 2 ausgesetzt sind, wenn die Messsonde 17 in das Fluid 2 eingetaucht ist. Die Messsonde 17 kann in ein frei strömendes Fluid 2 oder, wie in dem Beispiel der Fig. 1 und 2, zwischen Wandungen 24 eines z.B. rohrförmigen Strömungskanals eingetaucht werden, während das Gehäuse 16 außerhalb des strömenden Fluids 2 und davor geschützt gelagert ist. Bei bekanntem Querschnitt des Strömungskanals kann dabei aus der Strömungsgeschwindigkeit v in bekannter Weise der Massenstrom des Fluids 2 ermittelt werden.

Optional sind die Lichtquelle 11 an einer ersten Seite 25 - in diesem Beispiel: der Oberseite - des Trägers 21 und der Lichtfühler 14 an einer der ersten abgewandten zweiten Seite 26 - hier: der Unterseite - des Trägers 21 verankert, sodass die Lichtquelle 11 aus Sicht des Lichtfühlers 14 vom Träger 21 verdeckt ist, wodurch ein störender, an der transparenten Oberfläche 7 vorbeiführender Pfad des Lichtstrahls 12 zum Lichtfühler 14 verhindert wird. Dabei erstreckt sich der Lichtleiter 13, z.B. an der Spitze 27 der Messsonde 17, von der ersten Seite 25 zur zweiten Seite 26. Alternativ könnte ein solcher störender Lichtpfad durch andere Bauteile unterbunden werden.

Im dargestellten Beispiel hat der Lichtleiter 13 die Form eines Prismas, welches mit seiner einen Mantelfläche 28 der Lichtquelle 11 und dem Lichtfühler 14 zugewandt ist und sich optional an der ersten Seite 25 des Trägers 21 bis zur Lichtquelle 11 und an der zweiten Seite 26 des Trägers 21 bis zum Lichtfühler 14 erstreckt (Fig. 4a). Von den anderen Mantelflächen 29, 30 des Prismas bildet zumindest eine die genannte transparente Grenzfläche 7; die zweite der genannten anderen Mantelflächen 29, 30 könnte dabei verspiegelt sein oder beide anderen Mantelflächen 29, 30 gemeinsam die genannte transparente Grenzfläche 7 bilden. Alternativ könnte je eine Mantelfläche 28, 29, 30 der Lichtquelle 11 und dem Lichtfühler 14 zugewandt sein und/oder der Lichtleiter 13 z.B. parallelepipedisch oder gekrümmt sein.

Der Lichtleiter 13 ist aus transparentem Glas oder Kunststoff, z.B. Epoxy, od.dgl. Der Ausdruck "transparent" bezeichnet in diesem Zusammenhang - wie auch hinsichtlich der transparenten Grenzfläche 7 - eine gute Durchlässigkeit für zumindest die Wellenlänge bzw. den Wellenlängenbereich des Lichtstrahls 12.

Die Beispiele der Fig. 4a bis 4c veranschaulichen die Funktion des optischen zweiten Messelements 4. Ist die Messsonde 17 in ein Fluid 2 mit geringer optischer Dichte n eingetaucht (Fig. 4a), wird der Lichtstrahl 12 an den die transparente Grenzfläche 7 bildenden Mantelflächen 29, 30 des prismenförmigen Lichtleiters 13 totalreflektiert, d.h. es tritt Reflexion auf, und wird im Lichtfühler 14 erfasst, was die Detektorschaltung 15 detektiert. Ist andererseits die Messsonde 17 in ein Fluid 2 mit hoher optischer Dichte n eingetaucht (Fig. 4b), wird der Lichtstrahl 12 an der transparenten Grenzfläche 7 nicht reflektiert sondern bloß gebrochen, d.h. es tritt Refraktion auf. Der Lichtfühler 14 erfasst dann keinen reflektierten Lichtstrahl 12, was die Detektorschaltung 15 ebenfalls detektiert, u.zw. als ausbleibende Reflexion und somit Refraktion.

Soll die optische Dichte n des Fluids 2 genauer bestimmt werden, so kann optional entweder der Lichtfühler 14 an der der Lichtquelle 11 gegenüberliegenden Seite der transparenten Grenzfläche 7 angeordnet sein (nicht dargestellt), um den Refraktionswinkel β zu ermitteln, oder kann die Lichtquelle 11 den Lichtstrahl 12 in der Darstellungsebene der Fig. 4a z.B. auffächern, sodass der Lichtstrahl 12 in verschiedenen spitzen Winkeln α auf die transparente Grenzfläche 7 auftrifft. Der Lichtfühler 14 könnte dabei jeweils in streifen- oder matrixförmige Felder unterteilt sein, sodass anhand der von unterschiedlichen Feldern des Lichtfühlers 14 erfassten Refraktion oder Reflexionen auf den Refraktionswinkel β bzw. den Winkel α, bei welchem Totalreflexion eintritt, und folglich auf die optische Dichte n des Fluids 2 geschlossen werden kann. Alternativ könnte der Lichtstrahl 12 in zeitlicher Abfolge in verschiedenen Winkeln α auf die transparente Grenzfläche 7 auftreffen, z.B. indem die Lichtquelle 11 den Lichtstrahl 12 ablenkt oder indem die transparente Grenzfläche 7 geschwenkt wird, sodass die optische Dichte n des Fluids 2 anhand des zeitlichen Erfassens einer Reflexion durch den Lichtfühler 14 ermittelt werden kann.

Fig. 4c versinnbildlicht, dass das optische zweite Messelement 4 auch dann korrekte Messergebnisse liefert, wenn z.B. ein Tröpfchen 31 eines Fluids 2 mit hoher optischer Dichte n an der transparenten Grenzfläche 7 haftet, obwohl die Messsonde 17 in ein strömendes Fluid 2 geringer optischer Dichte n eingetaucht ist. In diesem Fall wird der Lichtstrahl 12 an der transparenten Grenzfläche 7 zunächst nur gebrochen und tritt in das Tröpfchen 31 ein, worauf er an dessen Außenfläche aufgrund der geringeren optischen Dichte n des umgebenden Fluids 2 reflektiert wird; in weiterer Folge tritt der reflektierte Lichtstrahl 12 unter nochmaliger Brechung, d.h. Refraktion, wieder in den Lichtleiter 13 ein und wird dort, ähnlich wie im Beispiel der Fig. 4a, zum Lichtfühler 14 hin weiter reflektiert. Die Detektionsschaltung 15 detektiert somit die optische Reflektivität der transparenten Grenzfläche 7 korrekt.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Messvorrichtung zum Messen der Strömungsgeschwindigkeit (v) eines strömenden Fluids (2), **gekennzeichnet durch**
ein erstes Messelement (3) mit einer dem strömenden Fluid (2) aussetzbaren Grenzfläche (6), welches zum Messen der Strömungsgeschwindigkeit (v) des Fluids (2) ausgebildet ist;
ein zweites Messelement (4) mit einer dem strömenden Fluid (2) aussetzbaren Grenzfläche (7), welches zum Messen einer charakteristischen Eigenschaft des Fluids (2) ausgebildet ist; und
eine an das erste und zweite Messelement (3, 4) angeschlossene Auswerteeinrichtung (5), welche zum Korrigieren der vom ersten Messelement (3) gemessenen Strömungsgeschwindigkeit (v) um den Einfluss der vom zweiten Messelement (4) gemessenen Eigenschaft des Fluids (2) auf das Messen der Strömungsgeschwindigkeit (v) ausgebildet ist.

2. Messvorrichtung nach Anspruch 1, **dadurch gekennzeichnet, dass** die genannte Grenzfläche (6) des ersten Messelements (3) wärmeleitend und das genannte erste Messelement (3) zum kalorimetrischen Messen der Strömungsgeschwindigkeit (v) des Fluids (2) anhand des Wärmeübergangs zwischen seiner wärmeleitenden Grenzfläche (6) und dem strömenden Fluid (2) ausgebildet ist.

3. Messvorrichtung nach Anspruch 2, **dadurch gekennzeichnet, dass** das genannte erste Messelement (3) einen ersten Temperaturfühler (8) zur Messung der Temperatur des Fluids (2) und einen von einer Regelschaltung (10) auf eine gegenüber der Temperatur des Fluids (2) konstante Temperaturdifferenz geheizten zweiten Temperaturfühler (9) umfasst, der die genannte wärmeleitende Grenzfläche (6) aufweist, wobei die von der Regelschaltung (10) dem zweiten Temperaturfühler (9) zugeführte Heizleistung ein Maß für die Strömungsgeschwindigkeit (v) ist.

4. Messvorrichtung nach einem der Ansprüche 1 bis 3, **dadurch gekennzeichnet, dass** die genannte Grenzfläche (7) des zweiten Messelements (4) transparent und das genannte zweite Messelement (4) zum Messen der optischen Dichte (n) des Fluids (2) anhand der optischen Reflektivität oder Refraktivität seiner transparenten Grenzfläche (7) zu dem strömenden Fluid (2) ausgebildet ist.

5. Messvorrichtung nach Anspruch 4, **dadurch gekennzeichnet, dass** das genannte zweite Messelement (4) eine Lichtquelle (11) zum Aussenden eines Lichtstrahls (12), für den Lichtstrahl (12) einen Lichtleiter (13) mit der genannten transparenten Grenzfläche (7), auf welche der ausgesandte Lichtstrahl (12) in spitzem Winkel (α) auftrifft, einen eine an der transparenten Grenzfläche (7) auftretende Reflexion oder Refraktion des Lichtstrahls (12) erfassenden Lichtfühler (14) und eine Detektorschaltung (15) für den Lichtfühler (14) zum Detektieren der optischen Reflektivität oder Refraktivität der transparenten Grenzfläche (7) umfasst.

6. Messvorrichtung nach den Ansprüchen 3 und 5, **dadurch gekennzeichnet, dass** die Auswerteeinrichtung (5) in einem Gehäuse (16) angeordnet ist, und dass der erste und der zweite Temperaturfühler (8, 9), die Lichtquelle (11), der Lichtleiter (13) und der Lichtfühler (14) in einer vom Gehäuse (16) separaten Messsonde (17) angeordnet sind.

7. Messvorrichtung nach Anspruch 6, **dadurch gekennzeichnet, dass** in dem Gehäuse (16) ferner die Regelschaltung (10) und die Detektorschaltung (15) angeordnet sind.

8. Messsonde, insbesondere für eine Messvorrichtung nach einem der Ansprüche 1 bis 7, umfassend:
einen Träger (21);
für das Messen der Strömungsgeschwindigkeit (v) des Fluids (2), einen an dem Träger (21) verankerten ersten Messgeber mit einer Grenzfläche (6);
für das Messen einer charakteristischen Eigenschaft des Fluids (2), einen an dem Träger (21) verankerten zweiten Messgeber mit einer Grenzfläche (7); und
einen elektrischen Anschluss (19), mit welchem die beiden Messgeber verbunden sind,
wobei die genannten Grenzflächen (6, 7) des ersten und des zweiten Messgebers an einer Außenseite der Messsonde (17) zum Eintauchen in ein strömendes Fluid (2) dargeboten sind.

9. Messsonde nach Anspruch 8, **dadurch gekennzeichnet, dass** der genannte erste Messgeber einen ersten Temperaturfühler (8) und einen zweiten Temperaturfühler (9) mit der genannten Grenzfläche (6) umfasst, wobei die genannte Grenzfläche (6) des ersten Messgebers wärmeleitend ist.

10. Messsonde nach Anspruch 8 oder 9, **dadurch gekennzeichnet, dass** der genannte zweite Messgeber eine Lichtquelle (11) zum Aussenden eines Lichtstrahls (12), für den Lichtstrahl (12) einen Lichtleiter (13) mit der genannten Grenzfläche (7), auf welche der ausgesandte Lichtstrahl (12) in spitzem Winkel (α) auftrifft, und einen eine an der Grenzfläche (7) auftretende Reflexion oder Refraktion des Lichtstrahls (12) erfassenden Lichtfühler (14) umfasst, wobei die genannte Grenzfläche (7) des zweiten Messgebers transparent ist.

11. Messsonde nach Anspruch 10, **dadurch gekennzeichnet, dass** die Lichtquelle (11) an einer ersten Seite (25) des Trägers (21) und der Lichtfühler (14) an einer der ersten abgewandten zweiten Seite (26) des Trägers (21) verankert sind, und dass sich der Lichtleiter (13) von der ersten zur zweiten Seite (25, 26) erstreckt.

12. Messsonde nach Anspruch 11, **dadurch gekennzeichnet, dass** der Lichtleiter (13) die Form eines Prismas hat, dessen eine Mantelfläche (28) der Lichtquelle (11) und dem Lichtfühler (14) zugewandt ist und von dessen anderen Mantelflächen (29, 30) zumindest eine die genannte transparente Grenzfläche (7) bildet.
